Europäisches Patentamt

European Patent Office

Office européen des brevets

(11) Publication number : **0 466 475 A2**

(12) # EUROPEAN PATENT APPLICATION

(21) Application number : **91306257.6**

(22) Date of filing : **10.07.91**

(51) Int. Cl.⁵ : **H04N 7/133**

(30) Priority : **10.07.90 JP 180474/90**
**10.07.90 JP 180472/90**

(43) Date of publication of application :
**15.01.92 Bulletin 92/03**

(84) Designated Contracting States :
**DE FR GB NL**

(71) Applicant : **FUJITSU LIMITED**
**1015, Kamikodanaka Nakahara-ku**
**Kawasaki-shi Kanagawa 211 (JP)**

(72) Inventor : **Noda, Tsugio**
**101 Haitsu Sunny-side, 176-1, Ikebata**
**Isehara-shi, Kanagawa, 259-11 (JP)**
Inventor : **Fukuda, Masahiro**
**302 Residence-Shiratori, 1624, Takamori**
**Isehara-shi, Kanagawa, 259-11 (JP)**
Inventor : **Murashita, Kimitaka**
**211 Fujitsu Atsugi-Ryo, 3-10, Sakae-cho**
**2-chome, Atsugi-shi Kanagawa, 243 (JP)**

(74) Representative : **Fenlon, Christine Lesley (GB)**
**et al**
**Haseltine Lake & Co. Hazlitt House 28**
**Southampton Buildings Chancery Lane**
**London WC2A 1AT (GB)**

(54) An image data encoding system.

㊼ An image data encoding system efficiently reconstructs an image through a progressive image buildup in stages. An original image is divided into blocks each having NXN picture elements, whose transformation coefficients are obtained by orthogonal transformations on their graduated values.

The image data encoding system has a transformation coefficient memory (61) for storing transformation coefficients ; a mask information memory (62) for storing mask information for masking transformation coefficients ; a masker (63) for masking the most significant bits of the transformation coefficients specified by mask information ; a shift information memory (72) storing quantization thresholds for quantizing the transformation coefficients ; and a quantizer (65) for quantizing the masked transformation coefficients per the quantization threshold.

The quantization threshold can be given a value of 2 to an integer power, and quantization can be attained by shifting bits of the transformation coefficients towards less significant bits by that power.

EP 0 466 475 A2

Fig. 12

## Background of the Invention

This invention pertains to an apparatus for encoding data such as continuous tone image data, and more particularly to an image data encoding method and apparatus for encoding continuous tone image data after splitting it into blocks comprising a plurality of picture elements and then performing orthogonal transformations for the picture elements in each block.

## Description of the Related Arts

It is necessary to efficiently encode the graduated values of respective picture elements, for storing or transmitting, at a high speed and with a high quality, image data representing continuous-tone images, such as grayscale images and color images, of which information volumes are orders of magnitude larger than numerical value data.

The Adaptive Discrete Cosine Transformation (hereafter abbreviated as ADCT) method, is widely used as a method for efficiently compressing image data. According to the ADCT method, images are divided into blocks comprising e.g. 8x8 picture elements. DCT coefficients expressing the distribution of space frequencies are determined by performing the two-dimensional discrete cosine transformations (hereafter abbreviated as DCTs) for the image signals from the picture elements of array blocks. The image signals are encoded by quantizing the DCT coefficients using thresholds determined from visual experiments, and then encoded, according to a Huffman table obtained statistically from the quantized coefficients.

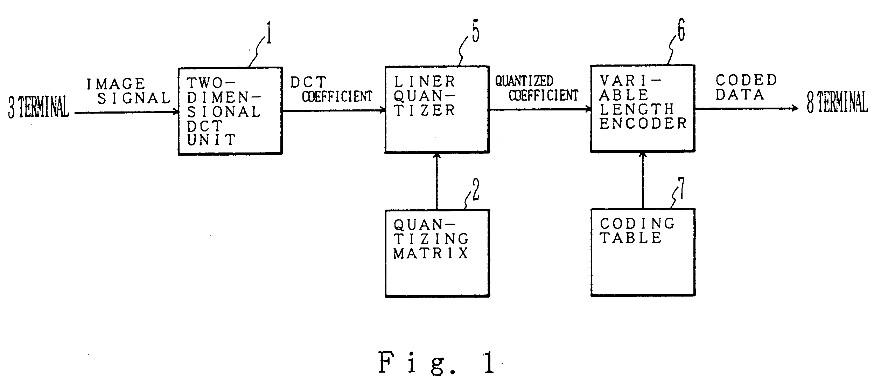

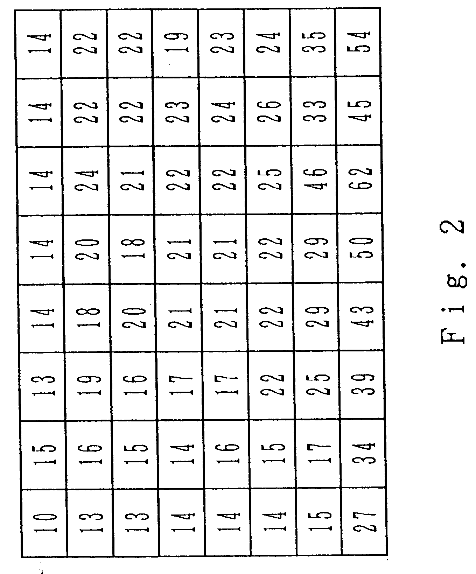

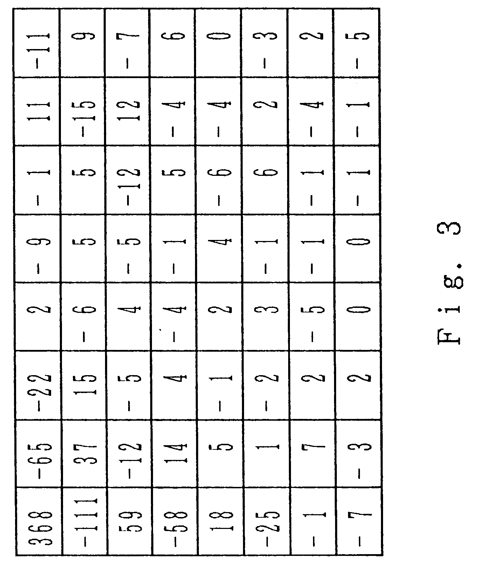

Figure 1 is the block diagram of an encoding circuit according to the ADCT method. Below is a description of its encoding processes. A two-dimensional DCT unit 4 receives, at its input terminal 3, sixty-four (64) image signals for an image block comprising 8x8 picture elements, as shown in Figure 2. The two-dimensional DCT unit 4 orthogonally transforms the received image signals into coefficients (calculates the DCT coefficients) having a space frequency distribution shown in Figure 3 and outputs them to a linear quantizer 5.

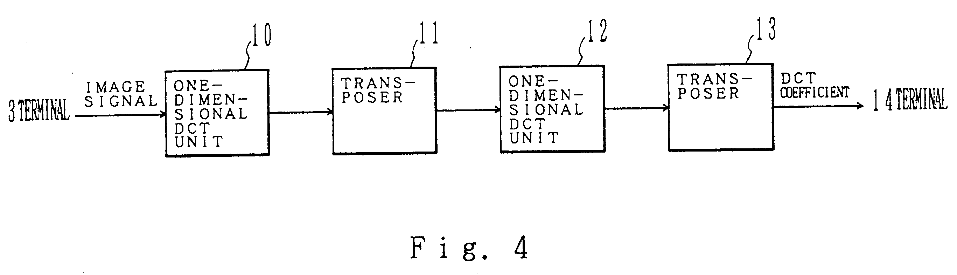

Figure 4 is a block diagram of the two-dimensional DCT unit 4. A one-dimensional DCT unit 10 performs a one-dimensional DCT for the image signals received at the terminal 3. A transposer 11 transposes the coefficients in the block and outputs the result to a one-dimensional DCT unit 12, which performs a one-dimensional DCT similarly to the one-dimensional DCT unit 10 for the received signals and outputs them to a transposer 13. The transposer 13 transposes the matrix similarly to the earlier described transposer 11 and outputs it to a terminal 14. By performing similar processes for all array blocks of the image data, the inputted signals are transformed to DCT coefficients.

The explanation continues by referring back to Figure 1. The linear quantizer 5 linearly quantizes the received DCT coefficients according to the quantization matrix 2 composed of the thresholds shown in Figure 5, which have been determined from visual experiments, so that quantized coefficients such as those shown in Figure 6 are obtained. As shown in Figure 6, the DCT coefficients having values less than the corresponding thresholds become "0", thereby generating quantized coefficients, among which only the DC components and only a few AC components have non-zero values.

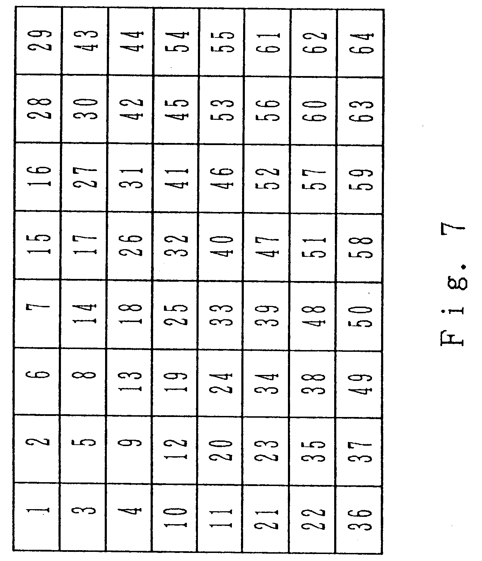

The two-dimensionally arrayed quantized coefficients are rearranged into a single dimension, per the scan order called zigzag scan as shown in Figure 7, to be inputted into a variable length encoder 6. The variable length encoder 6 encodes with variable length the difference between the DC components at the head end of a picture block and the DC components of the preceding block. It also encodes with variable length the values [coefficients whose values are other than (0)] of the AC components having the significant coefficients (hereafter called indices) and the run lengths (hereafter referred to as runs) of the insignificant coefficients [coefficients whose values are (0)] up to that point for the respective blocks. A coding table 7 composed of a Huffman table created by the statistical data for respective images is used to encode respective DC and AC components. A terminal 8 outputs in serial the encoded data.

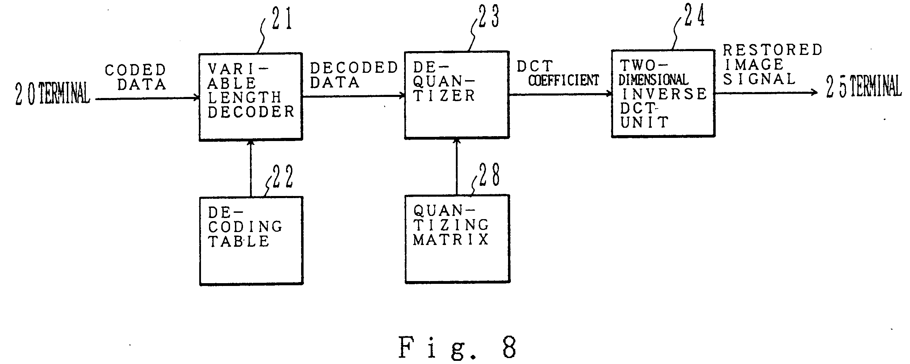

Subsequently, the coded data obtained by the earlier described circuit is reconstructed into an image by the following method. Figure 8 is a block diagram of a restoring circuit per the ADCT method. A variable length decoder 21 decodes coded data inputted from a terminal 20 by a decoding table 22 configured inversely to the Huffman table into fixed length data comprising indices and runs, and outputs them to a dequantizer 23. The dequantizer 23 restores the DCT coefficients by dequantizing the received indices through multiplications of the respective data by the quantization matrix 28. Then, the dequantizer 23 outputs the dequantized DCT coefficients hereafter abbreviated as dequantized coefficients to a two-dimensional inverse DCT unit 24. The two-dimensional inverse DCT unit 24 orthogonally transforms the received dequantized coefficients through an inverse DCT transformation, and transforms the coefficients indicating the distribution of space frequencies into image signals.

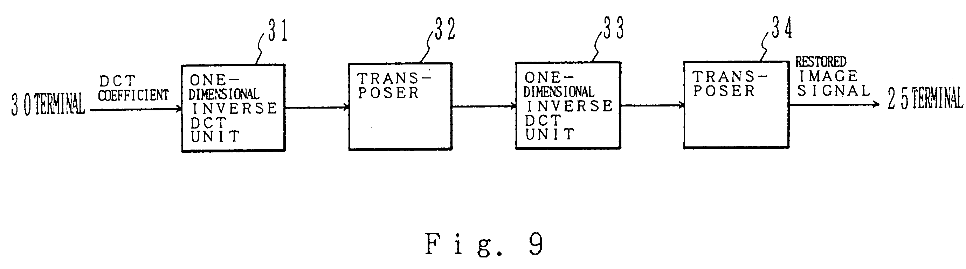

The two-dimensional inverse DCT unit 24 is explained below in detail. Figure 9 is a block diagram of a two-dimensional inverse DCT unit. A one-dimensional inverse DCT unit 31 performs an inverse DCT for the dequantized coefficients received at a terminal 30 and outputs them to a transposer 32. The transposer 32 transposes coefficients in a divided block and outputs them to a one-dimensional inverse DCT unit 33. The one-dimensional inverse DCT unit 33 performs another one-dimensional inverse DCT for the received transposed coefficients and outputs them to a transposer 34. The transposer 34 transposes the coefficients in the matrix, again. Images are restored by outputting signals obtained by the above processes from a terminal 25.

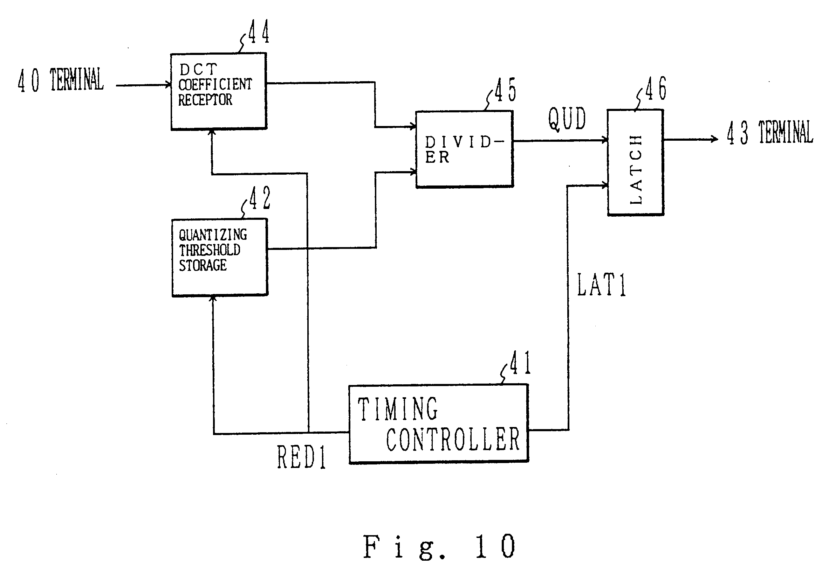

According to the ADCT method, quantized coefficients are obtained by quantizing DCT coefficients. Figure 10 is a block diagram of a conventional linear quantizing circuit.

The DCT coefficients inputted from a terminal 40 are supplied to and stored in a DCT coefficient receptor 44, which sequentially outputs to a divider 45 DCT coefficients in a block at intervals controlled by the data read-out signal (RED1) from a timing controller 41.

Similarly, the quantization threshold storage 42 sequentially outputs quantization thresholds of the DCT coefficients to the divider 45 per the data readout signal (RED1) from the timing controller 41. The divider 45 quantizes the received DCT coefficients according to quantizing thresholds, and outputs the result to a latch 46 as quantized coefficients (QUD). The timing controller 41 generates latch signal (LAT1) for the data in the latch 46 by calculating the access time of the quantizer. On receiving the latch signal (LAT1), the latch 46 latches the quantized coefficients and outputs the quantized coefficients from a terminal 43.

After the quantization of the coefficient is completed, the timing controller 41 instructs the DCT coefficient receptor 44 and the quantization threshold storage 42 to read the next DCT coefficient and quantization threshold for its quantization. By repeating the sequence, comprising reading the DCT coefficient stored in the DCT coefficient receptor 44, dividing it by the quantization threshold stored in the quantization threshold storage 42, and outputting the result as the quantized coefficient, in a similar manner for all elements in a block and for all blocks in a screen, all DCT coefficients in the image are quantized.

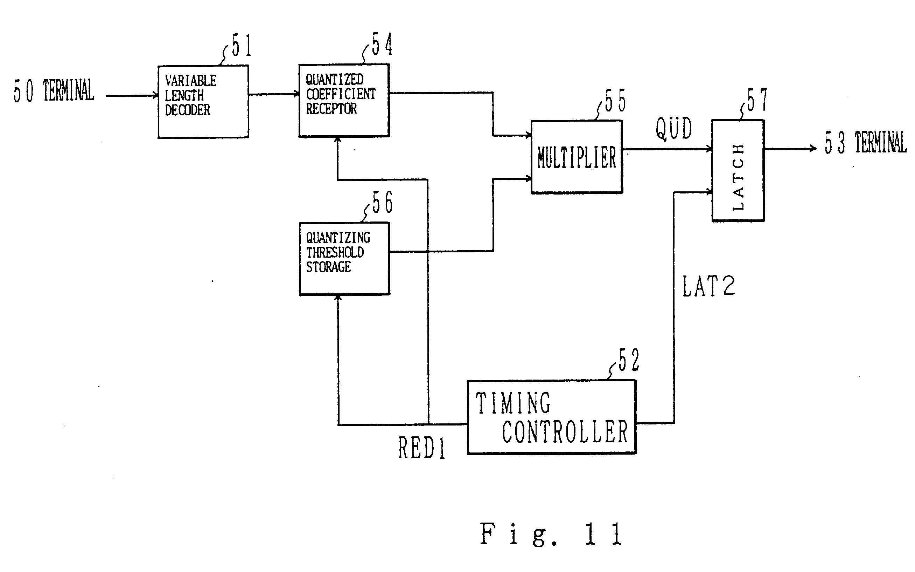

Meanwhile, the coded data is reconstructed to an image by dequantization in the following manner. Figure 11 is the block diagram of a conventional linear dequantizing circuit. A variable length decoder 51 decodes coded data inputted from a terminal 50 to quantized coefficients and inputs them to a quantized coefficient receptor 54. The quantized coefficient receptor 54 sequentially outputs received quantized coefficients on a one-by-one basis to the multiplier 55 per a data read-out signal (RED2) from a timing controller 52. Also, the quantization threshold storage 56 sequentially outputs to a multiplier 55 quantization thresholds corresponding to the respective dequantized coefficients. The multiplier 55 dequantizes the received dequantized coefficients according to quantization thresholds. The timing controller 52 calculates the access time of the respective circuits and generates a latch signal (LAT2) instructing a latch 57 to latch data. On receiving the latch signal (LAT2), the latch 57 latches the dequantized DCT coefficients and outputs them to a terminal 53.

After the dequantization of the quantized coefficient is completed, the timing controller 52 instructs the quantized coefficient receptor 54 and the quantization threshold storage 56 to read the next quantized coefficient and quantization threshold corresponding to the next coefficient for its dequantization. By repeating the sequence, comprising reading the quantized coefficient stored in the quantized coefficient receptor 54, dequantizing it according to the quantization threshold stored in the quantization threshold storage 56, and outputting the result, in a similar manner for all DCT coefficients representing all picture elements in a block and for all blocks in a screen, all DCT coefficients in the screen are restored.

The encoding per the conventional method described above performs a quantization by dividing DCT coefficients having eleven (11) bits by $2^{n2}$ (i.e. shifting by n2 bits). The quantization processing shifts away the least significant n2 bits of the DCT coefficients having 11 bits, thereby producing quantized data having (11-n2) bits. However, since the data volume is large, the method has the problem that the transmission and restoration take too much time. Furthermore, since high quality image data has a larger code volume, the transmission and restoration take an even longer time.

A database system requested to display a stored screen, for instance, can be used in a way that the target screen is found only by actually viewing screens. Hence, not only a high speed image reconstruction but also a progressive image buildup producing a screen stage-by-stage is desirable.

## Summary of the Invention

This invention aims at providing an image data encoding method and apparatus efficiently enabling high quality progressive image buildup.

This invention pertains to an image data encoding system capable of efficiently reconstructing an image through a progressive image buildup in stages, in which an original image is divided into blocks each having NXN picture elements, each block being transformed into DCT coefficients by two-dimensional discrete cosine transformations on their graduated values.

This invention configures the image data encoding system to have a DCT coefficient memory for memorizing DCT coefficients, a mask information memory for memorizing mask information for masking DCT coefficients, a masker for masking the most significant bits of the DCT coefficients specified by mask information, a quantization threshold memory memorizing quantization thresholds for quantizing the DCT coefficients, and a quantizer for quantizing the masked DCT coefficients per the quantization threshold.

The quantization threshold can be expressed in 2 to a power, and quantization can be attained by shifting bits of the DCT coefficients towards less significant bits by that power.

**Brief Description of the Drawings**

Figure 1 is the block diagram of encoding according to ADCT method;

Figure 2 is an exemplary table of original image signals;

Figure 3 is an exemplary table of DCT coefficients;

Figure 4 is the block diagram of a two-dimensional DCT unit;

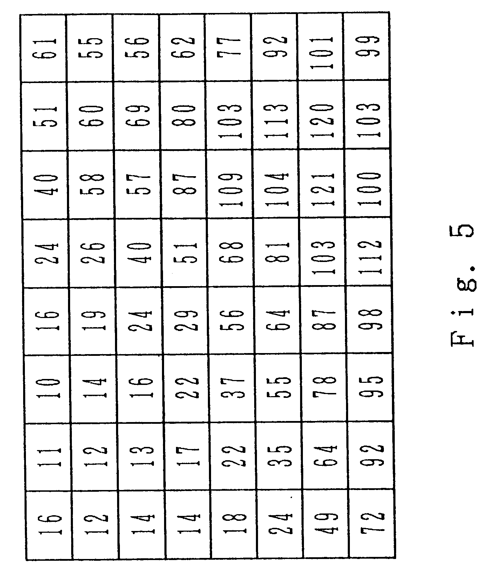

Figure 5 is a table of quantization thresholds for DCT coefficients;

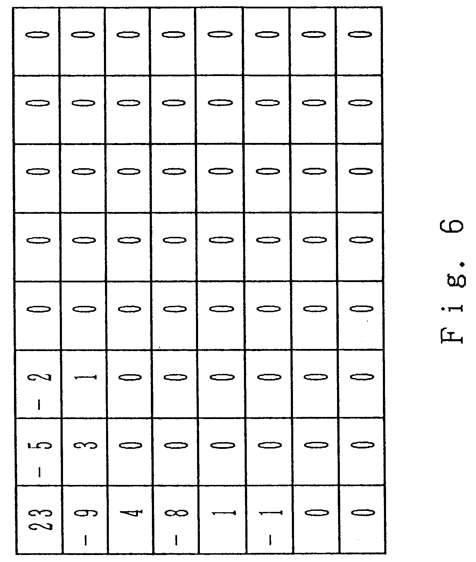

Figure 6 is a table of quantized coefficients;

Figure 7 shows the zig-zag scan order for scanning quantized coefficients;

Figure 8 is the block diagram of a restoring circuit according to the ADCT method;

Figure 9 is the block diagram of a two-dimensional inverse DCT unit;

Figure 10 is the block diagram of a conventional linear quantizing circuit;

Figure 11 is the block diagram of a conventional dequantizing circuit;

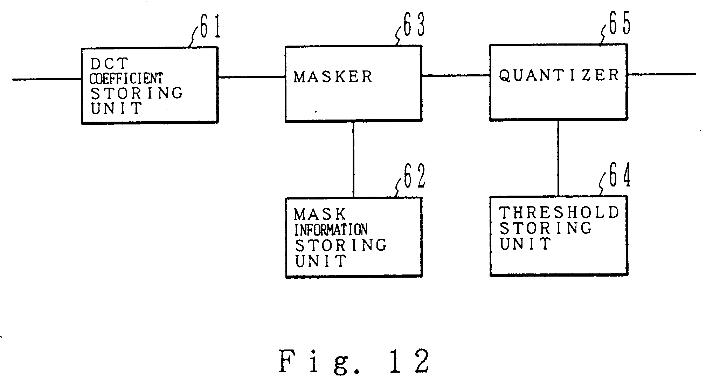

Figure 12 is the block diagram designating a principle of an image data encoding apparatus according to the present invention;

Figures 13A to 13D illustrate the quantization of DCT coefficients according to this invention;

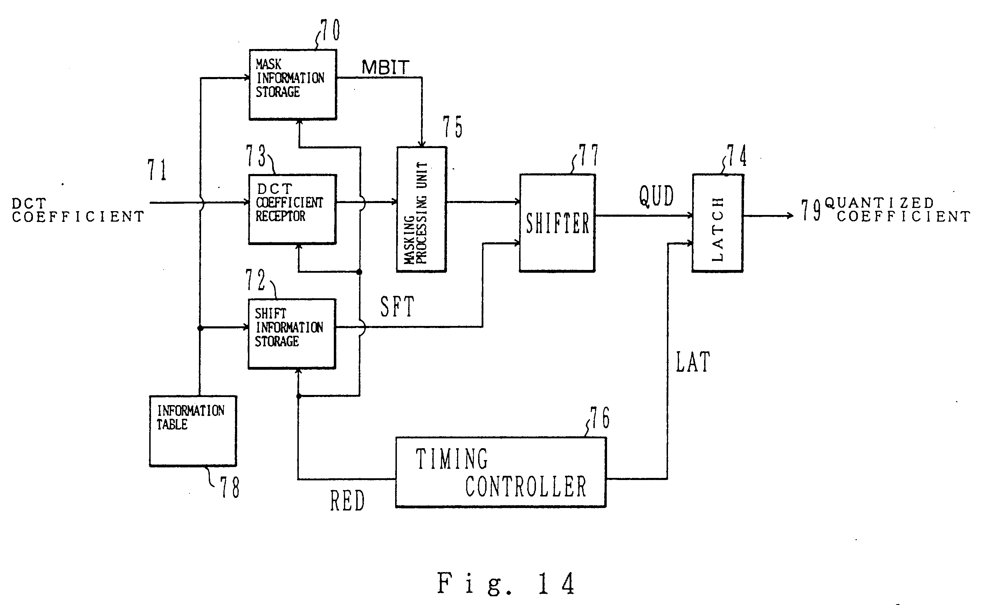

Figure 14 shows the system configuration of an embodiment of the present invention;

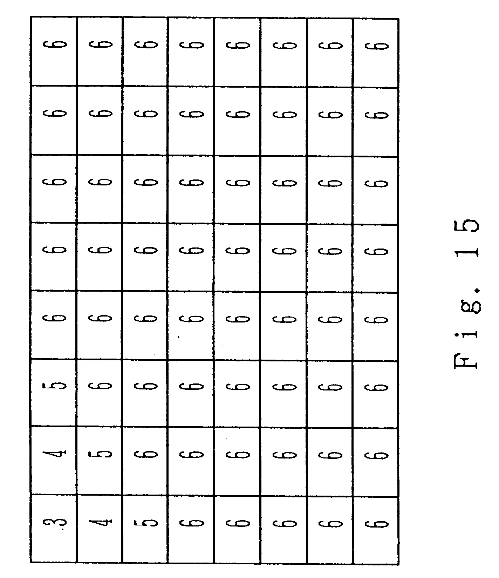

Figure 15 is a shift information table showing the shift information for the respective DCT coefficients in the first stage in the embodiment shown in Figure 14;

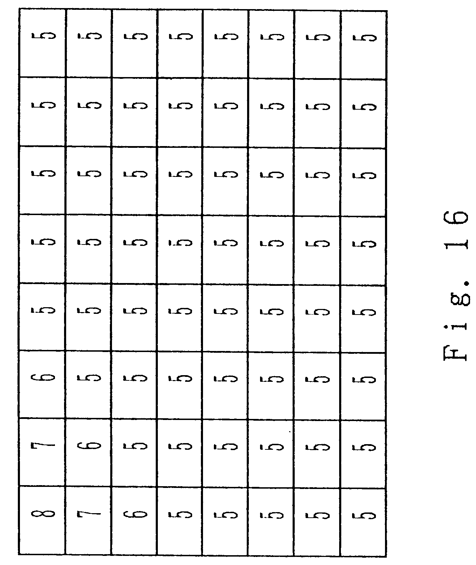

Figure 16 is a table showing the mask information for respective DCT coefficients in the second stage in the embodiment shown in Figure 14;

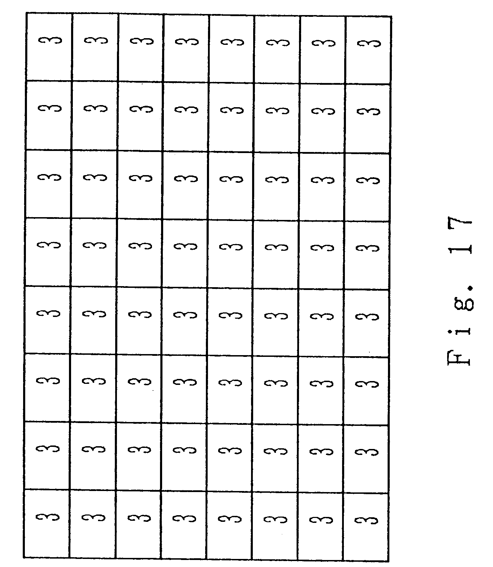

Figure 17 is a table for showing the shift information for respective DCT coefficients in the second stage in the embodiment shown in Figure 14;

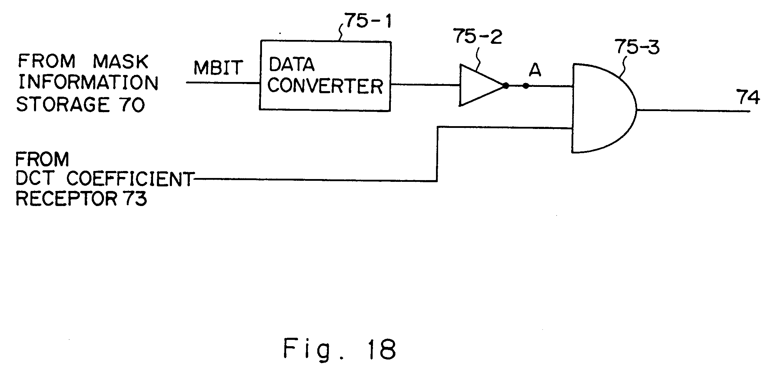

Figure 18 shows the configuration of a mask processing circuit used in the embodiment shown in Figure 14;

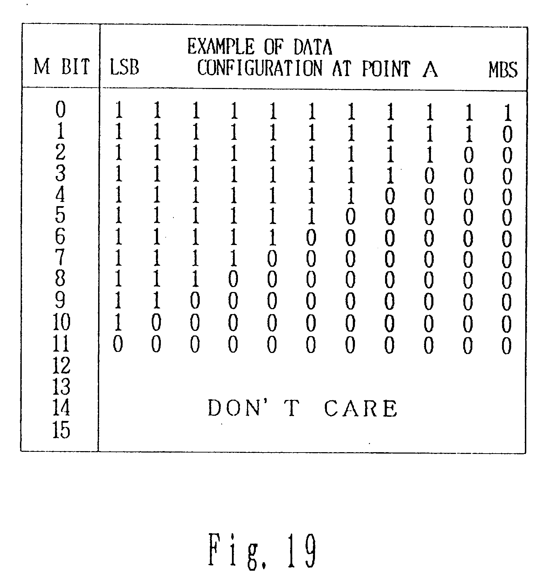

Figure 19 shows an example of the data configuration at point A shown in Figure 18;

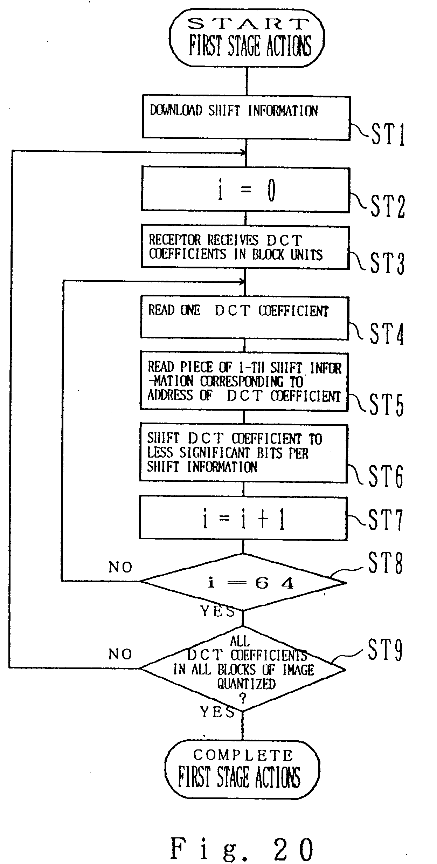

Figure 20 is a flowchart showing the quantizing actions for the first stage;

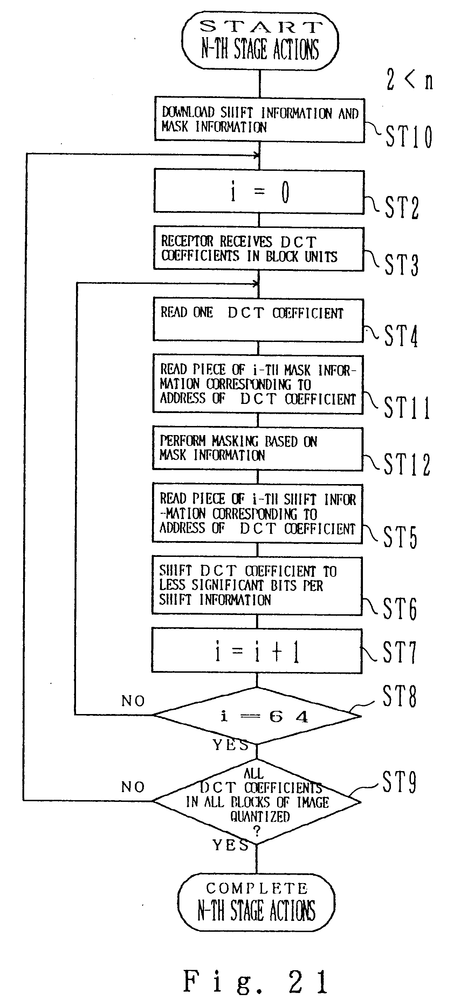

Figure 21 is a flowchart showing the quantizing actions for the n-th stage;

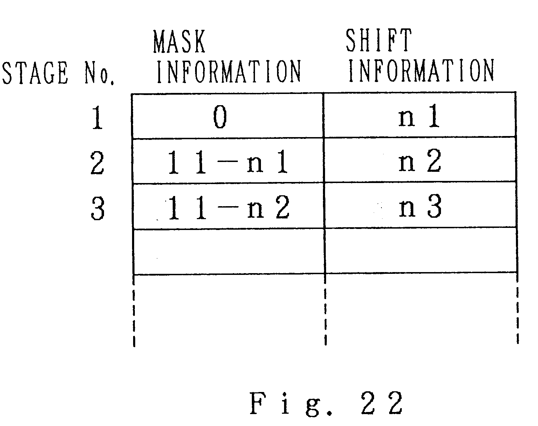

Figure 22 shows an information table in the embodiment shown in Figure 14 designating the relation among the stage number, the mask information and the shift information;

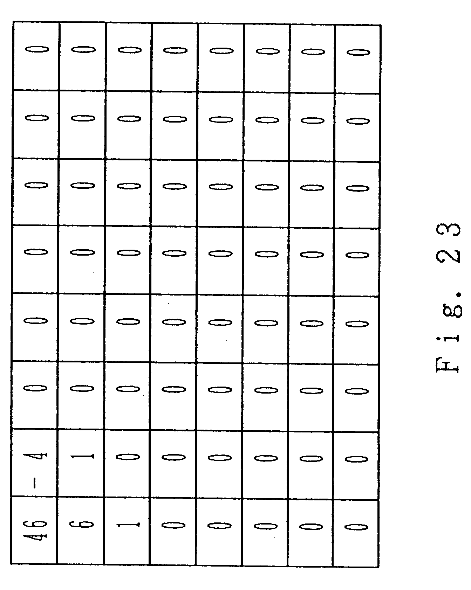

Figure 23 is a table of the quantized coefficients quantized in the first stage by the shift information shown in Figure 15;

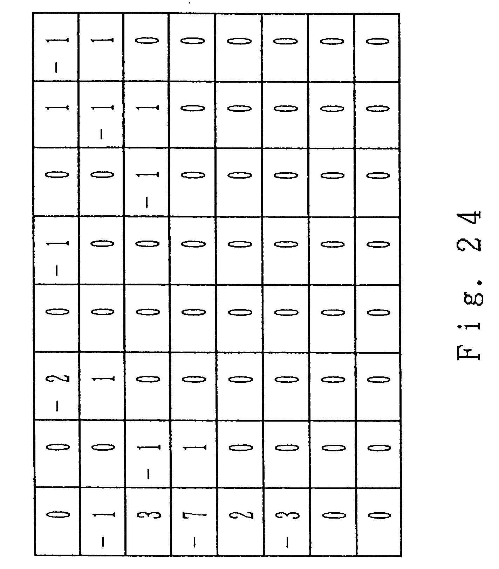

Figure 24 is a table of quantized coefficients quantized in the second stage by the shift information shown in Figure 15;

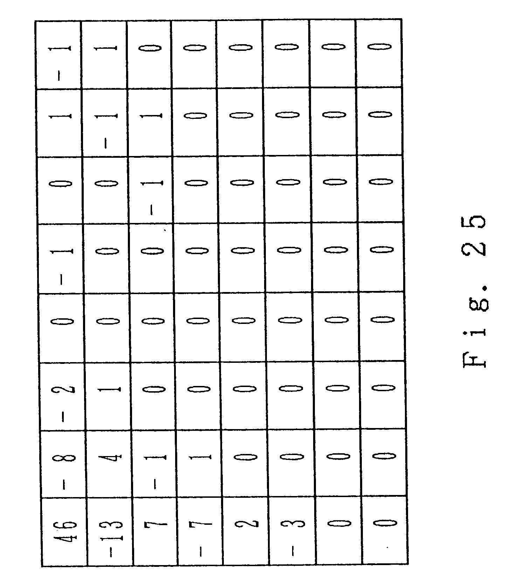

Figure 25 is a table of 8-bit quantizations;

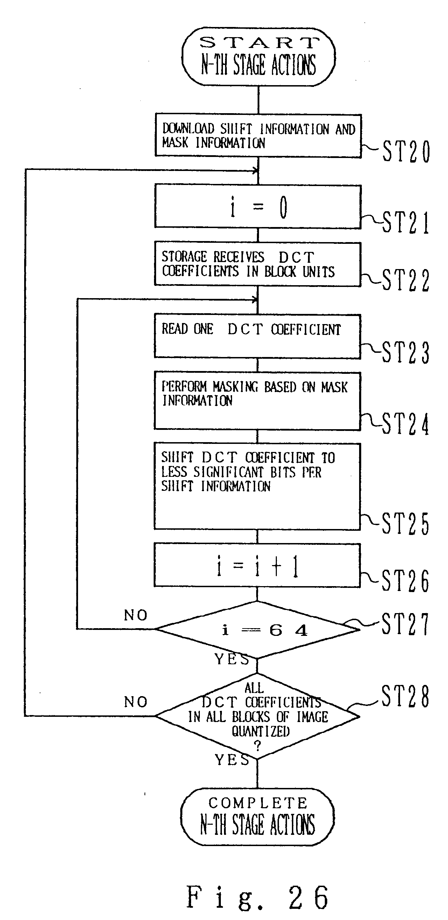

Figure 26 is a flowchart of the quantizations according to the second embodiment of this invention;

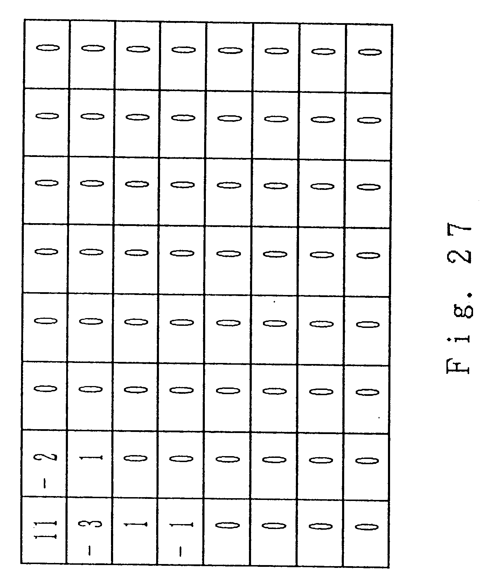

Figure 27 shows the DCT coefficients quantized in the first stage; and

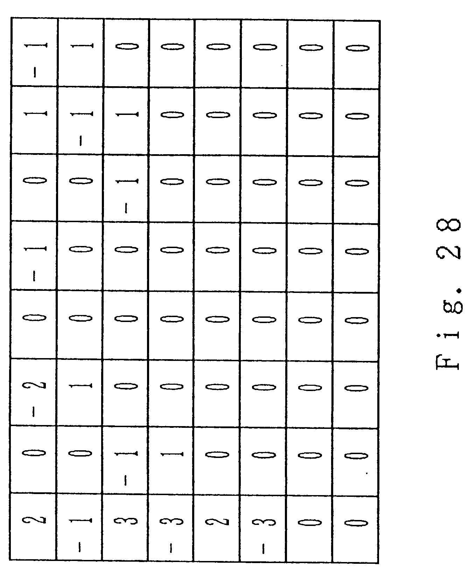

Figure 28 shows the DCT coefficients quantized in the second stage.

Description of the Preferred Embodiments

The preferred embodiments of this invention are described in detail below.

Figure 12 is the block diagram designating a principle of an image data encoding apparatus per this invention.

This invention pertains to an image data encoding apparatus quantizing the transformation coefficients obtained through performing two-dimensional discrete cosine transformations on graduated values of a plurality of NXN picture elements in the respective blocks divided from an image.

A DCT coefficient storing unit 61 memorizes the inputted DCT coefficients. A mask information storing unit 62 memorizes the mask information for masking NXN DCT coefficients in the blocks. A masker 63 masks the most significant bits of the DCT coefficients memorized in the DCT coefficient storing unit 61 according to the mask information memorized in the mask information storing unit 62. A threshold storing unit 64 memorizes thresholds for quantizing NXN DCT coefficients in the masked block. A quantizer 65 quantizes the DCT coefficients, which are masked by the masker 63, by the thresholds expressed in powers of 2 stored in threshold storing unit. For instance, the quantizer 65 shifts the bits of the DCT coefficients by the exponents of the powers.

The DCT coefficient storing unit 61 stores the inputted DCT coefficients and supplies them to the masker 63. The masker 63 masks the most significant bits, which are indicated by the mask information stored by the mask information storing unit 62, of the DCT coefficients and supplies them to the quantizing unit 65.

The quantizer 65 quantizes the DCT coefficients masked by the thresholds stored in the quantization threshold storing unit 64. This quantization is equivalent to shifting the most significant bits of the DCT coefficients by the logarithmic values to the base 2 of the thresholds which can be expressed in powers of 2.

For instance, the above configuration enables the quantizer 65 to shift the most significant bits of the DCT coefficients by a first predetermined digit number in the first stage. It enables the masker 63 to mask the 11-n1 (n1 is the bits shifted in the first stage) and the quantizer 65 to further shift the currently most significant bits by a second predetermined digit number in the second stage. Hence, the first stage generates data for reconstructing a rough image and the second stage generates data for reconstructing an image having a higher resolution. That is, a rough image is reconstructed from the data, which are quantized coefficients, obtained in the first stage, and then a more detailed image is progressively built up from the data obtained in the second stage. Thus, it is effective e.g. for searching a desired image from among a multiplicity of images stored in an image database.

Figures 13A through 13D illustrate the quantization of DCT coefficients per this invention. Figure 13B shows a case in which all DCT coefficients are quantized finally by $2^{n2}$ through two-stage progressive encoding. The DCT coefficients comprise 11 bits as shown in Figure 13A.

In the first stage, when the quantization threshold $q(i)$ for the i-th DCT coefficient is set to $2^{n1}$, as shown in Figure 13C, it is quantized by $2^{n1}$ (, where $2^{n1} > 2^{n2}$) and the result is encoded. Here, mask information $n(i)$ for all DCT coefficients in the first stage is set to "0". As described later, mask information "0" indicates that the bits configuring DCT coefficients mask nothing.

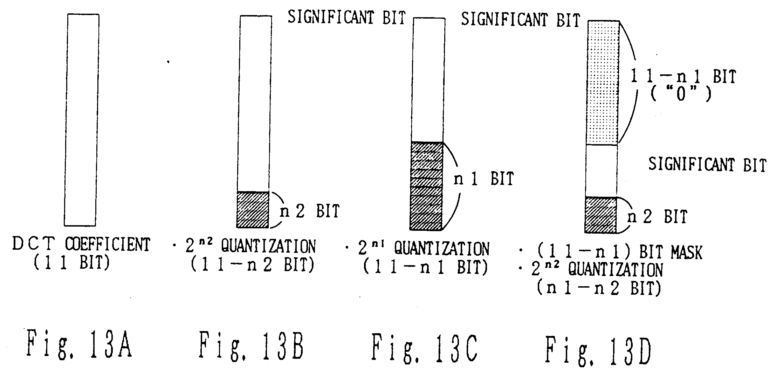

Mask information $n(i)$ for the i-th DCT coefficient in the second stage (Figure 13D) is set to 11-n1 and the quantization threshold $q(i)$ for the i-th DCT coefficient is set to $2^{n2}$. Then, the masker 63 masks the most significant 11-n1 bits of the i-th DCT coefficient, encodes the result by quantizing it by $2^{n2}$ and transmits the code. Conventionally, as shown in Figure 2B, the quantization is performed by $2^{n2}$. Yet, in this invention, the quantization in the first stage is performed by $2^{n1}$ and that in the second stage is performed by $2^{n2}$. These two quantizations reduces the number of significant bits from the conventional 11-n2 to n1-n2 in the second stage. Namely, significant bits $11-n_2$ are transmitted at one stage in a conventional art. In contrast, in the present invention, $11-n_2$ bits are divided into $11-n_1$ bits and $n_1-n_2$ bits, are transmitted in two stages, and thus, significant bits which are transmitted per stage can be reduced.

Figure 14 shows the system configuration of an embodiment of this invention. A DCT coefficient receptor 73 stores the DCT coefficients inputted from a terminal 71. An information table 78 stores mask information and shift information for the respective DCT coefficients. Mask information and shift information correspond to the stages and are read in the respective stages. A mask information storage 70 stores the mask information and a shift information storage 72 stores the shift information.

The DCT coefficient receptor 73 outputs the memorized DCT coefficients to a masking processing unit 75. At about the same time, the mask information storage 70 outputs to the masking processing unit 75 the mask information (MBIT: 0 through 15) respectively corresponding to the outputted DCT coefficients. The masking processing unit 75 masks DCT coefficients according to the four-bit data (MBIT: 0 through 15) supplied from the mask information storage 70.

Figure 15 is a shift information table showing the shift information for the respective DCT coefficients in the first stage and which is stored in shift information storage 72. The numbers in the respective frames indicate that the DCT coefficients are shifted towards the less significant digits by those numbers of bits (and the most significant bits receive 0). Since DCT coefficients are transmitted no earlier than the first stage, the most significant bits need not be masked in the first stage, and all DCT coefficients have the mask bit number of 0.

Figure 16 is a table showing the mask information for respective DCT coefficients in the second stage and which is stored in mask information storage 70. Figure 17 is a table for showing the shift information for respective DCT coefficients in the second stage and which is stored in shift information storage 72. The mask information in the second stage has a value equal to the difference obtained by subtracting the number of bits to be shifted in the first stage from 11, i.e. (11-n1 bits indicated by shift information). After the quantization is performed based on the information shown in Figures 15, 16 and 17 by the first and second stages described earlier, all elements have DCT coefficients of 8 bits.

Meanwhile, the reconstructing side reconstructs $2^{n2}$ quantized data by performing bit additions by adding the data restored in the first stage as the higher significant 11-n1 bits and the data restored in the second stage as the lower significant n1-n2 bits. Also, by dividing quantized data into a plurality of data having respective bit numbers and encoding them, the transmission to and the restoration at the receiving side enables images to be progressively built up, thereby shortening the time necessary for the processing to display the entire screen, albeit the screen shows only a rough image. Further, as with the quantization matrix, storing 64 pieces of independent mask information for the respective DCT coefficients enables an image quality to be controlled flexibly corresponding to the image.

Figure 18 shows the configuration of the masking processing unit 75 used in this embodiment. A data converter 75-1 converts data inputted from the mask information storage 70 into 11-bit data, which is inverted by an invertor circuit 75-2.

Figure 19 shows an example of the data configuration at point A shown in Figure 18. Mask information MBIT consists of 4 bits. It has the values of 0 to 11 and the values of 12 to 15 are "don't care". [In case of an M bit quantization, the maximum value of MBIT is (M).] Since the DCT coefficient has 11 bits in the embodiment of this invention, a data converter 75-1 outputs "1" for the number of bits corresponding to the value of MBIT comprising 4 bits. The invertor circuit 75-2 inverts the bits, thereby providing the 11 bit mask information. An AND circuit 75-3 provides the logical product between the (mask information) data outputted from the invertor circuit 75-2 and the DCT coefficients inputted from the DCT coefficient receptor 73, so that the most significant bits (11) of the DCT coefficients are masked and become 0. Here, the AND circuit 75-3 comprises 11 two-input AND gates calculating the logical AND for the respective bits.

The explanation continues with reference reverting to Figure 14. A shift information storage 72 outputs to a shifter 77 shift number signals (SFT) per the signals from the timing controller 76. The shifter 77 shifts the masked DCT coefficients by the shift number indicated by the shift number signals (SFT). The shifted DCT coefficients are outputted to the latch 74, latched by latch signals (LAT) from the timing controller 76 and outputted to a terminal 79. By performing these processes for the entire block and for all the blocks, one stage of quantization of a screen is completed.

The actions shown in Figure 14 are for quantization of a screen for a particular stage, and the actions are repeated for the number of the stages. The timing controller 76 performs the stage controls. When the actions for the respective stages begin, the corresponding pieces among the those of the mask information and shift information stored in the information table 78 are read and stored in the mask information storage 70 and the shift information storage 72.

The operation of timing controller 76 are explained in further detail. Figure 20 is a flowchart showing the quantizing actions for the first stage. Figure 21 is a flowchart showing the quantizing actions for the n-th stage. The following is a description of the respective steps ST1 through ST12 shown in Figures 20 and 21.

ST1: When the actions for the first stage begin, shift information is downloaded from the information table 78 and is stored in the shift information storage 72.

ST2: Counter value i is set to 0. The counter is provided in the timing controller 76.

ST3: The DCT coefficient receptor 73 receives one-block of data in a screen (8x8 DCT coefficients).

The above steps ST1, ST2 and ST3 conclude the initial processing of a block.

ST4: One DCT coefficient is read for performing a quantization.

ST5: I-th shift information corresponding to the address of the above DCT coefficient is read.

ST6: DCT coefficients are shifted towards the less significant bits based on the shift information.

The above steps ST4, ST5 and ST6 conclude the quantization of one DCT coefficient.

The counter value i described earlier indicates the current coefficient among the 8x8 DCT coefficients in a block and the position (address) of the shift information.

ST7: To process the next position, counter value i is incremented by 1.

ST8: It is checked whether or not the counter value i reaches 64. If i does not reach 64 (N), the steps from ST4 are executed again. If i reaches 64 (Y), since all 64 DCT coefficients in a block are quantized, the process goes on to the next step ST9.

ST9: It is determined whether or not the entire DCT coefficients in all blocks in the image have been quantized. If it is not (N) determined that the entire DCT coefficients in a block in the image have been quantized, the step reverts to ST2 to process the next specified block. If it is (Y) determined that the entire DCT coefficients in all blocks in the image have been completely quantized, the actions in the first stage are completed. The DCT coefficients thus quantized in the first stage produce image data for obtaining a rough image.

When further actions are necessary for the second stage and thereafter, quantizations for the n-th stage begin as shown in Figure 21. Since quantizations are initially performed in the first stage, no DCT coefficients partially quantized exist at the beginning of the first stage. Yet, when the second or later stage begins, since some DCT coefficients are already quantized, they need to be masked, so that they are not quantized.

ST10: In lieu of ST1, shift information and mask information are downloaded in this step for the n-th stage quantization. That is mask information is stored in the mask information storage 70 and shift information is stored in the shift information storage 72.

ST11: Before step ST5 for reading shift information, mask information corresponding to the address of the read DCT coefficients are read.

ST12: The DCT coefficients are masked by the mask information, and the process reverts to step ST5.

These procedures enable the shift information and mask information to be changed each time the DCT coefficients are quantized.

The information table 78 shown in Figure 14 stores the mask information and shift information in stage units, as shown in Figure 22. The mask information storage 70 and shift information storage 72 respectively store the mask information and the shift information of each stage. The first embodiment of this invention requires the information table 78 to have the capacities for storing the various mask information for stages.

Figure 23 is a table of the quantized coefficients quantized in the first stage by the shift information shown in Figure 15. Shift information changes in correspondence with the respective DCT coefficients and is quantized corresponding to these changes.

Figure 24 is a table of quantized coefficients quantized in the second stage. In the second stage, quantizations are performed based on the mask information and shift information for respective DCT coefficients in the second stage as shown in Figures 16 and 17.

The quantized coefficients in the first stage shown in Figure 23 and the quantized coefficients in the second stage shown in Figure 24 generate data for progressively building an image up, so that 8-bit quantizations shown in Figure 25 are completed.

Although the first stage quantization described earlier does not perform an masking operation, if mask information is set to 0, then masking actions are not performed e.g. in the first stage. The actions in the n-th stage can be the same as those in the first stage.

Although the shift length changes in correspondence with the respective DCT coefficients in a block in the first embodiment of this invention described earlier, it can be set constant in a stage with regard to one block, as in a second embodiment of this invention explained below. When the shift length changes in correspondence with the DCT coefficients in a block, an image is progressively built up in a way most suited to human vision. On the other hand, when all shift lengths in a particular stage are set constant within one block, although the most suitability for human vision cannot be attained, the circuit for memorizing shift lengths can be smaller and the circuit is simplified.

Figure 26 is a flowchart of the quantizations per the second embodiment of this invention.

ST20: Shift information and mask information of the N-th stage is specified, which designates the mask information and shift information of the stage shown in Figure 22. The second embodiment requires the information table 78 to have the capacities for memorizing only one piece of shift information and one piece of mask information per stage. In addition, the memory capacity of the information table per the second embodiment needs to be only 1/(NXN)th of that per the first embodiment. After the mask information for the stage is stored in the mask information storage 70, it is outputted to the masking processing unit 75. After the shift information for the stage is stored in the shift information storage 72, it is outputted to the shifter 77.

When the actions for the n-th stage begins, shift information and mask information are downloaded from the information table 78.

ST21: The counter value i is initialized to 0.

ST22: The DCT coefficient receptor 73 stores DCT coefficients in a block.

ST23: The DCT coefficient specified by the counter value i is read from the DCT coefficient receptor 73.

ST24: The DCT coefficient is masked.

ST25: The DCT coefficient is shifted towards the less significant bits based on the shift information, thereby concluding the quantization of the DCT coefficient.

ST26: To quantize the next DCT coefficient, the counter value i is incremented by 1.

ST27: It is determined whether or not the counter value i is 64. If the counter value i is determined not (N) to be 64, the process reverts to step ST23. If the counter value i is determined to be (Y) 64, since all 64 DCT coefficients in a block are quantized, the process goes on to the next step, ST28.

ST28: It is determined whether or not all blocks in an image are quantized. If it is determined that not (N) the quantizations of all blocks in the image have been completed, the process reverts to ST21. If it is (Y) determined that the quantizations of all blocks in the image have been completed, the processes for the n-th stage are consummated.

Since the actions illustrated in Figure 26 do not require masking in the first stage, the result of no masking is obtained by making the mask information 0.

In the above processes, if six (6) quantization is performed in the first stage, its shift length is five (5) bits. Five (5) bits are shifted without masking in the first stage, and after five (5) bits are masked six bits (6) bits are masked and three (3) bits are shifted in the second stage. The processes in the first stage and the second stage enable 8-bit quantization to be performed with results similar to those shown in Figure 25.

Figures 27 and 28 show quantization coefficients obtained in the first stage and the second stage, respectively.

Although the above description uses the first and second embodiments of this invention as examples, the application of this invention is not limited to such embodiments. For instance, by having processors perform the actions shown in Figures 20, 21 and 26, similar effects can be attained.

As described above, this invention enables a high-quality image to be reconstructed by encoding a high resolution image using rough quantizations prior to ordinary quantizations. For a case where conventional progressive image buildup can reconstruct images in a maximum of 64 stages, because it is controlled by the number of coefficients in a block to be encoded. This invention can do it in, for example, a maximum of 704 stages by combining the number of quantizing bits and the number of coefficients in a block, thereby enabling an efficient progressive image buildup matching the application.

## Claims

1. An image data encoding method comprising:

a step of dividing an original image into a plurality of blocks respectively comprising NXN picture elements;

a step of obtaining transformation coefficients by performing orthogonal transformations on the graduated values of said NXN picture elements in the respective ones of said plurality of blocks;

a step of masking the most significant bits of said transformation coefficients, the number of said most significant bits being specified by received mask information; and

a step of quantizing NXN transformation coefficients in said plurality of blocks by a threshold having values of 2 to an integer power with the power being specified by received shift information.

2. The image data encoding method according to claim 1, wherein:

said step of quantizing NXN transformation coefficients are performed by shifting bits by said power.

3. An image data encoding method comprising:

a step of dividing an original image into a plurality of blocks respectively comprising NXN picture elements;

a step of obtaining transformation coefficients by performing orthogonal transformations on the graduated values of said NXN picture elements in the respective ones of said plurality of blocks;

a step of quantizing NXN transformation coefficients in said plurality of blocks by a first threshold having values of 2 to an integer power in a first stage;

a step of masking the most significant bits of said transformation coefficients, the number of said most significant bits being specified by received mask information in later stages; and

a step of quantizing said NXN transformation coefficients in said plurality of blocks by a respective threshold for each of said later stages being specified by received shift information in later stages.

4. The image data encoding method according to claim 3, wherein:

said step of quantizing NXN transformation coefficients are performed by shifting bits by said power expressing said respective threshold.

5. An image data encoding apparatus:

dividing an original image into a plurality of blocks respectively comprising NXN picture elements;

obtaining transformation coefficients by performing orthogonal transformations on the graduated values of said NXN picture elements in the respective ones of said plurality of blocks:

said image data encoding apparatus comprising:

a transformation coefficient memory means for storing received transformation coefficients;

a mask means for masking the most significant bits of said transformation coefficients memorized in said transformation coefficient memory means, the number of said most significant bits being specified by received mask information; and

a quantization means for quantizing said transformation coefficients masked by said mask means according to a quantization threshold.

6. The image data encoding apparatus according to claim 5, wherein:

said quantization threshold has a value of 2 to an integer power;

said quantizing means shifts bits of said transformation coefficients towards less significant bits by said power.

7. An image data encoding apparatus:

dividing an original image into a plurality of blocks respectively comprising NXN picture elements;

obtaining transformation coefficients by performing orthogonal transformations on the graduated values of said NXN picture elements in the respective ones of said plurality of blocks:

said image data encoding apparatus comprising:

a transformation coefficient memory means for memorizing received transformation coefficients;

a mask information memory means for memorizing NXN pieces of mask information for masking NXN transformation coefficients respectively in said plurality of blocks;

a mask means for masking the most significant bits of said transformation coefficients memorized in said transformation coefficient memory means, the number of said most significant bits being specified by received mask information;

a quantization threshold memory means memorizing NXN quantization thresholds for quantizing said NXN transformation coefficients respectively in said plurality of blocks; and

a quantization means for quantizing said transformation coefficients masked by said mask means according to the quantization threshold memorized in said quantization threshold memory means.

8. The image data encoding apparatus according to claim 7, further comprising:

a control means for controlling the operations of said quantization means and disabling said mask means in a first stage and the operations of said mask means and said quantization means after said first stage.

9. The image data encoding apparatus according to claim 8, wherein:

said mask information stored said mask information memory means and said quantization threshold stored in said quantization threshold memory means are changed according to said stages.

Fig. 1

| | | | | | | | |
|----|----|----|----|----|----|----|----|
| 10 | 15 | 13 | 14 | 14 | 14 | 14 | 14 |
| 13 | 16 | 19 | 18 | 20 | 24 | 22 | 22 |
| 13 | 15 | 16 | 20 | 18 | 21 | 22 | 22 |
| 14 | 14 | 17 | 21 | 21 | 22 | 23 | 19 |
| 14 | 16 | 17 | 21 | 21 | 22 | 24 | 23 |
| 14 | 15 | 22 | 22 | 22 | 25 | 26 | 24 |
| 15 | 17 | 25 | 29 | 29 | 46 | 33 | 35 |
| 27 | 34 | 39 | 43 | 50 | 62 | 45 | 54 |

Fig. 2

| 368 | -65 | -22 | 2  | -9 | -1  | 11  | -11 |
|-----|-----|-----|----|----|-----|-----|-----|
| -111| 37  | 15  | -6 | 5  | 5   | -15 | 9   |
| 59  | -12 | -5  | 4  | -5 | -12 | 12  | -7  |
| -58 | 14  | 4   | -4 | -1 | 5   | -4  | 6   |
| 18  | 5   | -1  | 2  | 4  | -6  | -4  | 0   |
| -25 | 1   | -2  | 3  | -1 | 6   | 2   | -3  |
| -1  | 7   | 2   | -5 | -1 | -1  | -4  | 2   |
| -7  | -3  | 2   | 0  | 0  | -1  | -1  | -5  |

Fig. 3

3 TERMINAL → IMAGE SIGNAL → [ONE-DIMENSIONAL DCT UNIT] 10 → [TRANS-POSER] 11 → [ONE-DIMENSIONAL DCT UNIT] 12 → [TRANS-POSER] 13 → DCT COEFFICIENT → 14 TERMINAL

Fig. 4

| 16 | 11 | 10 | 16 | 24 | 40 | 51 | 61 |
|----|----|----|----|----|----|----|----|
| 12 | 12 | 14 | 19 | 26 | 58 | 60 | 55 |
| 14 | 13 | 16 | 24 | 40 | 57 | 69 | 56 |
| 14 | 17 | 22 | 29 | 51 | 87 | 80 | 62 |
| 18 | 22 | 37 | 56 | 68 | 109 | 103 | 77 |
| 24 | 35 | 55 | 64 | 81 | 104 | 113 | 92 |
| 49 | 64 | 78 | 87 | 103 | 121 | 120 | 101 |
| 72 | 92 | 95 | 98 | 112 | 100 | 103 | 99 |

Fig. 5

| 23 | −5 | −2 | 0 | 0 | 0 | 0 | 0 |
|----|----|----|---|---|---|---|---|
| −9 | 3  | 1  | 0 | 0 | 0 | 0 | 0 |
| 4  | 0  | 0  | 0 | 0 | 0 | 0 | 0 |
| −8 | 0  | 0  | 0 | 0 | 0 | 0 | 0 |
| 1  | 0  | 0  | 0 | 0 | 0 | 0 | 0 |
| −1 | 0  | 0  | 0 | 0 | 0 | 0 | 0 |
| 0  | 0  | 0  | 0 | 0 | 0 | 0 | 0 |
| 0  | 0  | 0  | 0 | 0 | 0 | 0 | 0 |

Fig. 6

| 1 | 2 | 6 | 7 | 15 | 16 | 28 | 29 |
|---|---|---|---|----|----|----|----|
| 3 | 5 | 8 | 14 | 17 | 27 | 30 | 43 |
| 4 | 9 | 13 | 18 | 26 | 31 | 42 | 44 |
| 10 | 12 | 19 | 25 | 32 | 41 | 45 | 54 |
| 11 | 20 | 24 | 33 | 40 | 46 | 53 | 55 |
| 21 | 23 | 34 | 39 | 47 | 52 | 56 | 61 |
| 22 | 35 | 38 | 48 | 51 | 57 | 60 | 62 |
| 36 | 37 | 49 | 50 | 58 | 59 | 63 | 64 |

Fig. 7

EP 0 466 475 A2

```
                    ┌21                  ┌23                    ┌24
                                                                        RESTORED
           CODED    ┌─────────┐ DECODED ┌─────────┐ DCT      ┌─────────┐ IMAGE
 20 TERMINAL DATA   │VARI-    │ DATA    │DE-      │ COEFFICIENT│TWO-     │ SIGNAL  25 TERMINAL
────────────────────▶│ABLE    │─────────▶│QUAN-    │───────────▶│DIMENSIONAL│────────────────▶
                    │LENGTH   │         │TIZER    │           │INVERSE  │
                    │DECODER  │         │         │           │DCT-     │
                    └─────────┘         └─────────┘           │UNIT     │
                         ▲                   ▲                └─────────┘
                         │                   │
                      ┌22                  ┌28
                    ┌─────────┐         ┌─────────┐
                    │DE-      │         │QUAN-    │
                    │CODING   │         │TIZING   │
                    │TABLE    │         │MATRIX   │
                    └─────────┘         └─────────┘
```

F i g.  8

Fig. 9

EP 0 466 475 A2

40 TERMINAL →

```
        ╭44
┌─────────────┐
│   D C T     │
│ COEFFICIENT │
│  RECEPTOR   │
└─────────────┘
```

```
        ╭45                    ╭46
    ┌─────────┐            ┌───────┐
    │ DIVID-  │    QUD     │   L   │
    │   ER    │ ─────────→ │   A   │ ──→ 43 TERMINAL
    └─────────┘            │   T   │
                           │   C   │
                           │   H   │
                           └───────┘
```

```
        ╭42
┌─────────────┐
│  QUANTIZING │
│  THRESHOLD  │
│   STORAGE   │
└─────────────┘
```

LAT1

```
                      ╭41
        ┌─────────────────────┐
        │      TIMING         │
        │   CONTROLLER        │
        └─────────────────────┘
```

RED1

F i g. 1 0

EP 0 466 475 A2

50 TERMINAL →

VARIABLE
LENGTH
DECODER
51

QUANTIZED
COEFFICIENT
RECEPTOR
54

MULTIPLIER
55

QUD

LATCH
57

→ 53 TERMINAL

QUANTIZING
THRESHOLD
STORAGE
56

LAT2

TIMING
CONTROLLER
52

RED1

Fig. 11

EP 0 466 475 A2

| DCT COEFFICIENT STORING UNIT /61 |  | MASKER /63 |  | QUANTIZER /65 |

```
┌──────────────┐      ┌──────────┐      ┌──────────────┐
│ DCT          │      │          │      │              │
│ COEFFICIENT  │──────│  MASKER  │──────│  QUANTIZER   │──────
│ STORING      │      │          │      │              │
│ UNIT         │      └────┬─────┘      └──────┬───────┘
└──────────────┘           │                   │
                           │                   │
                      ┌────┴──────┐      ┌──────┴───────┐
                      │ MASK      │      │ THRESHOLD    │
                      │ INFORMATION│     │ STORING      │
                      │ STORING   │      │ UNIT         │
                      │ UNIT      │      │              │
                      └───────────┘      └──────────────┘
```

Fig. 12

Fig. 13A     Fig. 13B     Fig. 13C     Fig. 13D

DCT COEFFICIENT (11 BIT)

SIGNIFICANT BIT · $2^{n_2}$ QUANTIZATION (11 − n2 BIT) n2 BIT

SIGNIFICANT BIT · $2^{n_1}$ QUANTIZATION (11 − n1 BIT) n1 BIT

11 − n1 BIT ("0") SIGNIFICANT BIT n2 BIT · (11 − n1) BIT MASK · $2^{n_2}$ QUANTIZATION (n1 − n2 BIT)

Fig. 14

Fig. 15

EP 0 466 475 A2

| 8 | 7 | 6 | 5 | 5 | 5 | 5 | 5 |
|---|---|---|---|---|---|---|---|
| 7 | 6 | 5 | 5 | 5 | 5 | 5 | 5 |
| 6 | 5 | 5 | 5 | 5 | 5 | 5 | 5 |
| 5 | 5 | 5 | 5 | 5 | 5 | 5 | 5 |
| 5 | 5 | 5 | 5 | 5 | 5 | 5 | 5 |
| 5 | 5 | 5 | 5 | 5 | 5 | 5 | 5 |
| 5 | 5 | 5 | 5 | 5 | 5 | 5 | 5 |
| 5 | 5 | 5 | 5 | 5 | 5 | 5 | 5 |

Fig. 16

EP 0 466 475 A2

| 3 | 3 | 3 | 3 | 3 | 3 | 3 | 3 |
|---|---|---|---|---|---|---|---|
| 3 | 3 | 3 | 3 | 3 | 3 | 3 | 3 |
| 3 | 3 | 3 | 3 | 3 | 3 | 3 | 3 |
| 3 | 3 | 3 | 3 | 3 | 3 | 3 | 3 |
| 3 | 3 | 3 | 3 | 3 | 3 | 3 | 3 |
| 3 | 3 | 3 | 3 | 3 | 3 | 3 | 3 |
| 3 | 3 | 3 | 3 | 3 | 3 | 3 | 3 |
| 3 | 3 | 3 | 3 | 3 | 3 | 3 | 3 |

Fig. 17

FROM MASK
INFORMATION
STORAGE 70

MBIT

75-1

DATA
CONVERTER

75-2

A

75-3

74

FROM
DCT COEFFICIENT
RECEPTOR 73

Fig. 18

| M BIT | LSB CONFIGURATION AT POINT A MBS | | | | | | | | | | |
|---|---|---|---|---|---|---|---|---|---|---|---|
| 0 | 1 | 1 | 1 | 1 | 1 | 1 | 1 | 1 | 1 | 1 | 1 |
| 1 | 1 | 1 | 1 | 1 | 1 | 1 | 1 | 1 | 1 | 1 | 0 |
| 2 | 1 | 1 | 1 | 1 | 1 | 1 | 1 | 1 | 1 | 0 | 0 |
| 3 | 1 | 1 | 1 | 1 | 1 | 1 | 1 | 1 | 0 | 0 | 0 |
| 4 | 1 | 1 | 1 | 1 | 1 | 1 | 1 | 0 | 0 | 0 | 0 |
| 5 | 1 | 1 | 1 | 1 | 1 | 1 | 0 | 0 | 0 | 0 | 0 |
| 6 | 1 | 1 | 1 | 1 | 1 | 0 | 0 | 0 | 0 | 0 | 0 |
| 7 | 1 | 1 | 1 | 1 | 0 | 0 | 0 | 0 | 0 | 0 | 0 |
| 8 | 1 | 1 | 1 | 0 | 0 | 0 | 0 | 0 | 0 | 0 | 0 |
| 9 | 1 | 1 | 0 | 0 | 0 | 0 | 0 | 0 | 0 | 0 | 0 |
| 10 | 1 | 0 | 0 | 0 | 0 | 0 | 0 | 0 | 0 | 0 | 0 |
| 11 | 0 | 0 | 0 | 0 | 0 | 0 | 0 | 0 | 0 | 0 | 0 |
| 12 | | | | | | | | | | | |
| 13 | | | | | | | | | | | |
| 14 | DON' T CARE | | | | | | | | | | |
| 15 | | | | | | | | | | | |

Fig. 19

Fig. 20

START
N-TH STAGE ACTIONS

$2 < n$

DOWNLOAD SHIFT INFORMATION AND
MASK INFORMATION — ST10

$i = 0$ — ST2

RECEPTOR RECEIVES D C T
COEFFICIENTS IN BLOCK UNITS — ST3

READ ONE   D C T   COEFFICIENT — ST4

READ PIECE OF i-TH MASK INFOR-
MATION CORRESPONDING TO
ADDRESS OF   D C T   COEFFICIENT — ST11

PERFORM MASKING BASED ON
MASK INFORMATION — ST12

READ PIECE OF i-TH SHIFT INFOR
-MATION CORRESPONDING TO
ADDRESS OF   D C T   COEFFICIENT — ST5

SHIFT D C T COEFFICIENT TO
LESS SIGNIFICANT BITS PER
SHIFT INFORMATION — ST6

$i = i + 1$ — ST7

NO — $i = 6 4$ — ST8

YES

NO — ALL
D C T COEFFICIENTS
IN ALL BLOCKS OF IMAGE
QUANTIZED
? — ST9

YES

COMPLETE
N-TH STAGE ACTIONS

F i g .   2 1

31

| STAGE No. | MASK INFORMATION | SHIFT INFORMATION |
|:---:|:---:|:---:|
| 1 | $0$ | $n1$ |
| 2 | $11-n1$ | $n2$ |
| 3 | $11-n2$ | $n3$ |
| | | |

Fig. 22

Fig. 23

Fig. 24

EP 0 466 475 A2

| 46 | − 8 | − 2 | 0 | − 1 | 0 | 1 | − 1 |
|----|-----|-----|---|-----|---|---|-----|
| −13 | 4 | 1 | 0 | 0 | 0 | − 1 | 1 |
| 7 | − 1 | 0 | 0 | 0 | − 1 | 1 | 0 |
| − 7 | 1 | 0 | 0 | 0 | 0 | 0 | 0 |
| 2 | 0 | 0 | 0 | 0 | 0 | 0 | 0 |
| − 3 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Fig. 25

Fig. 26

EP 0 466 475 A2

| | | | | | | | |
|---|---|---|---|---|---|---|---|
| 11 | − 2 | 0 | 0 | 0 | 0 | 0 | 0 |
| − 3 | 1 | 0 | 0 | 0 | 0 | 0 | 0 |
| 1 | 0 | 0 | 0 | 0 | 0 | 0 | 0 |
| − 1 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Fig. 27

EP 0 466 475 A2

| | | | | | | | |
|---:|---:|---:|---:|---:|---:|---:|---:|
| 2 | 0 | − 2 | 0 | − 1 | 0 | 1 | − 1 |
| − 1 | 0 | 1 | 0 | 0 | 0 | − 1 | 1 |
| 3 | − 1 | 0 | 0 | 0 | − 1 | 1 | 0 |
| − 3 | 1 | 0 | 0 | 0 | 0 | 0 | 0 |
| 2 | 0 | 0 | 0 | 0 | 0 | 0 | 0 |
| − 3 | 0 | 0 | 0 | 0 | 0 | 0 | 0 |
| 0 | 0 | 0 | 0 | 0 | 0 | 0 | 0 |
| 0 | . 0 | 0 | 0 | 0 | 0 | 0 | 0 |

Fig. 28